# EUROPÄISCHE PATENTSCHRIFT

(11) **EP 3 928 002 B1**
(45) Veröffentlichungstag und Bekanntmachung des Hinweises auf die Patenterteilung: **31.05.2023**
(21) Anmeldenummer: 19828674.2
(22) Anmeldetag: 17.12.2019
(51) Int. Cl.: F16J 15/18, F16J 15/34, F16J 15/38

(54) **DRUCKUMKEHR GEEIGNETE GLEITRINGDICHTUNGSANORDNUNG**
MECHANICAL FACE SEAL ASSEMBLY SUITABLE FOR PRESSURE REVERSAL
ENSEMBLE D'ÉTANCHÉITÉ À BAGUES GLISSANTES ADAPTÉ POUR L'INVERSION DE PRESSION

(30) Priorität: 18.02.2019 DE 102019202109
(43) Veröffentlichungstag der Anmeldung: 29.12.2021
(73) Patentinhaber: EagleBurgmann Germany GmbH & Co. KG, 82515 Wolfratshausen (DE)
(72) Erfinder: DRÖSCHER, Peter, 82538 Geretsried (DE); REISCHL, Robert, 83646 Bad Tölz (DE); STEMPLINGER, Thomas, 83674 Gaißach (DE); SCHOLZ, Carsten, 82547 Eurasburg (DE)
(74) Vertreter: Hoefer & Partner Patentanwälte mbB
(86) Internationale Anmeldenummer: PCT/EP2019/085548
(87) Internationale Veröffentlichungsnummer: WO 2020/169235

(56) Entgegenhaltungen:
- EP-A1- 2 063 155
- WO-A1-2011/095195
- WO-A1-2017/211491
- US-A- 6 076 830
- US-B1- 6 293 555

## Beschreibung

Die vorliegende Erfindung betrifft eine Gleitringdichtungsanordnung, welche auch bei einer Druckumkehr geeignet ist, eine ausreichende Abdichtung bereitzustellen.

Gleichringdichtungen sind aus dem Stand der Technik in unterschiedlichen Ausgestaltungen bekannt. Im Betrieb können dabei beispielsweise aufgrund von Fehlbedienungen oder Ausfällen oder Schäden von Bauteilen Situationen auftreten, bei denen sich die Druckverhältnisse an der Gleitringdichtungsanordnung umkehren. In einer derartigen Situation muss die Gleitringdichtungsanordnung sicherstellen, dass hier möglichst keine oder nur eine geringe Leckage auch bei Druckumkehr auftritt, da beispielsweise bei der Abdichtung von toxischen oder für Menschen und Umwelt schädlichen Medien sonst eine entsprechende Schädigung beziehungsweise Umweltverschmutzung auftreten könnte. Hierzu werden beispielsweise Gleitringdichtungsanordnungen mit verbesserten Nebendichtelementen verwendet, wie z.B. aus der DE10 2012 022 465 A1 bekannt. Hierbei handelt es sich jedoch üblicherweise um sehr teure Nebendichtelemente, welche die Gleitringdichtungsanordnung hinsichtlich der Kosten entsprechend verteuern.

Aus der EP 2063155 A1 ist eine Gleitringdichtungsanordnung mit den Merkmalen des Oberbegriffs des Anspruchs 1 bekannt.

Es ist daher Aufgabe der vorliegenden Erfindung, eine Gleitringdichtungsanordnung bereitzustellen, welche bei einfachem und kostengünstigem Aufbau, insbesondere einer Druckumkehr standhält und möglichst eine Leckage bei Druckumkehr an der Gleitringdichtung verhindert.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung stellt dabei sicher, dass auch bei einer Druckumkehr der Druckverhältnisse an der Gleitringdichtungsanordnung eine sichere Abdichtung möglich ist. Hierbei ist es möglich, dass standardisierte Bauteile verwendet werden können, sodass die Gleitringdichtungsanordnung besonders kostengünstig bereitstellbar ist. Hierzu umfasst die Gleitringdichtungsanordnung eine Gleitringdichtung mit einem rotierenden und einem stationären Gleitring, welche zwischen ihren Dichtflächen einen Dichtspalt definieren. Ferner ist eine Vorspanneinrichtung vorgesehen, welche den stationären Gleitring in Axialrichtung der Gleitringdichtungsanordnung gegen den rotierenden Gleitring vorspannt. Ferner umfasst die Gleitringdichtungsanordnung einen Abstützring, welcher am stationären Gleitring angeordnet ist und welcher in Axialrichtung relativ zum stationären Gleitring beweglich ist, wobei die Vorspanneinrichtung zwischen dem axial beweglichen Abstützring und dem stationären Gleitring angeordnet ist. Ferner ist eine Fixiereinrichtung vorgesehen, welche eingerichtet ist, den Abstützring an einem stationären Bauteil axial beweglich zu fixieren. Weiter ist ein Anschlag vorgesehen, welcher an der Fixiereinrichtung vorgesehen ist, welcher eine erste

Wegstrecke begrenzt, um welche der axial bewegliche Abstützring axial bewegbar ist, sowie eine Nebendichtung, welche eingerichtet ist zwischen dem Abstützring und dem stationären Bauteil abzudichten. Bei einer Druckumkehr wird der Abstützring von der anderen Axialseite als im Normalbetrieb mit einem höheren Druck beaufschlagt, sodass der Abstützring in Richtung zum stationären Gleitring bewegt wird. Dadurch wird eine Federkraft der Vorspanneinrichtung auf den stationären Gleitring erhöht, sodass eine weiterhin vorhandene Abdichtung am Dichtspalt zwischen rotierendem und stationärem Gleitring sichergestellt ist.

Ferner ist zwischen dem stationären Bauteil und dem axial beweglichen Abstützring eine zweite axiale Wegstrecke vorgesehen. Hierbei ist im Fall einer Druckumkehr der Druckverhältnisse die erste axiale Wegstrecke zwischen dem Abstützring und dem Anschlag kleiner als die zweite axiale Wegstrecke zwischen dem Abstützring und dem stationären Bauteil. Dadurch kann immer eine sichere Abdichtung der Nebendichtung sichergestellt werden.

Vorzugsweise umfasst die Fixiereinrichtung eine Vielzahl von Bolzen, und der Abstützring umfasst eine Vielzahl von Ausnehmungen, durch welche die Bolzen hindurchgeführt werden. Dadurch kann eine einfache und sichere axiale Bewegbarkeit des Abstützringes erreicht werden. Vorzugsweise sind die Ausnehmungen am äußeren Umfang des Abstützringes vorgesehen. Besonders bevorzugt sind die Ausnehmungen dabei als Halbkreise oder als Halbovale vorgesehen.

Ein besonders einfacher Aufbau ergibt sich, wenn der Anschlag wenigstens einen Haltering umfasst, welcher an wenigstens einem der Bolzen angeordnet ist, um die axiale Wegstrecke des Abstützringes zu begrenzen. Der Haltering kann dabei am Bolzen fixiert sein oder alternativ auch einen Absatz am Bolzen statt des Halterings vorgesehen sein.

Gemäß einer alternativen Ausgestaltung der Erfindung umfasst die Fixiereinrichtung eine Vielzahl von mit Kopf versehenen Bolzen, wobei der Anschlag durch den Kopf der Bolzen bereitgestellt ist.

Besonders bevorzugt sind die Bolzen entlang des Umfangs des Abstützringes in gleichen Abständen zueinander angeordnet.

Weiter bevorzugt, weist der Abstützring eine Nut zur Aufnahme der Nebendichtung auf. Dadurch kann ein besonders kompakter Aufbau realisiert werden. Die Nut im Abstützring stellt ferner eine möglichst kleine axiale Baulänge der Gleitringdichtungsanordnung sicher. Die Nut ist dabei an einer vom stationären Gleitring abgewandten Seite am Abstützring vorgesehen. Besonders bevorzugt ist die Nut dabei an einem radialen Innenumfang des Abstützringes angeordnet.

Alternativ ist der Abstützring nutfrei und die Nebendichtung ist an einem stationären Bauteil angeordnet. Hierbei ist besonders bevorzugt eine Nut für die Nebendichtung in dem stationären Bauteil vorgesehen, in welcher die Nebendichtung angeordnet ist. Die Nebendichtung dichtet dann an der nutfreien Seite des Abstützrings ab.

Die Nebendichtung ist besonders bevorzugt ein O-Ring oder ein Quadring. Dadurch kann die Nebendichtung besonders einfach und kostengünstig bereitgestellt werden.

Weiter bevorzugt umfasst die Vorspanneinrichtung eine Vielzahl von Federn, welche insbesondere Zylinderfedern sind. Die Federn sind besonders bevorzugt entlang des Umfangs in gleichen Abständen angeordnet und stützen sich am Abstützring ab. Alternativ ist nur ein einziges Federelement vorgesehen.

Weiter bevorzugt umfasst die Gleitringdichtungsanordnung ferner einen stationären Gleitringträger, welcher den stationären Gleitring hält, wobei die Vorspanneinrichtung zwischen dem stationären Gleitringträger und dem Abstützring angeordnet ist. Hierdurch steht die Vorspanneinrichtung nicht in direktem Kontakt mit dem stationären Gleitring, sodass insbesondere ein Material des stationären Gleitringes frei gewählt werden kann.

Nachfolgend werden bevorzugte Ausführungsbeispiele der Erfindung unter Bezugnahme auf die begleitende Zeichnung im Detail beschrieben. In der Zeichnung ist dargestellt:
- Fig. 1: eine schematische Längsschnittansicht einer Gleitringdichtungsanordnung gemäß einem ersten Ausführungsbeispiel der Erfindung,
- Fig. 2: eine schematische, vergrößerte Teil-Schnittansicht der Gleitringdichtungsanordnung von Fig. 1, und
- Fig. 3: eine schematische, vergrößerte Teilschnittansicht einer Gleitringdichtungsanordnung gemäß einem zweiten Ausführungsbeispiel der Erfindung.

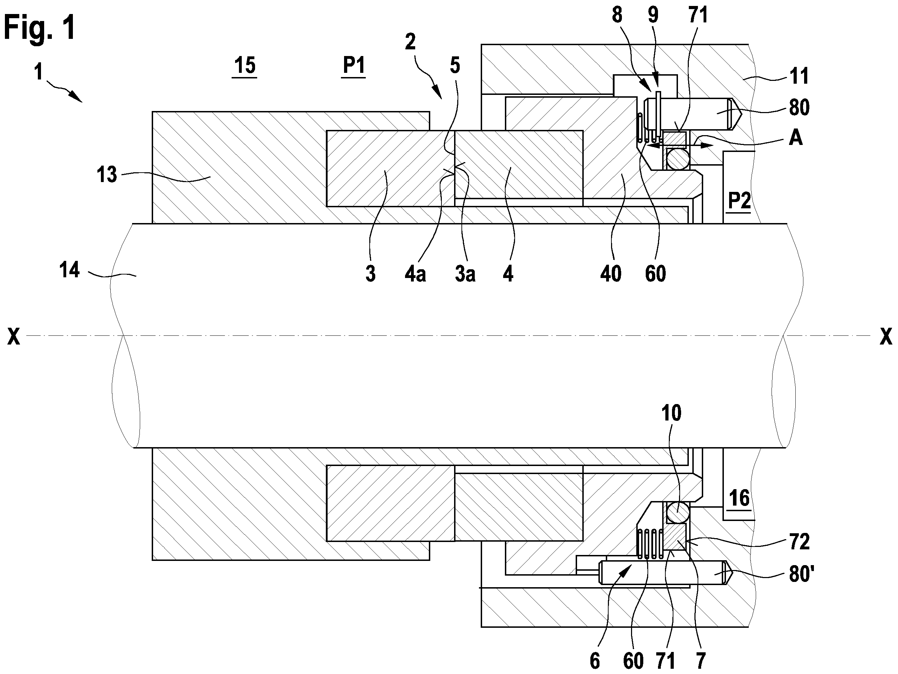

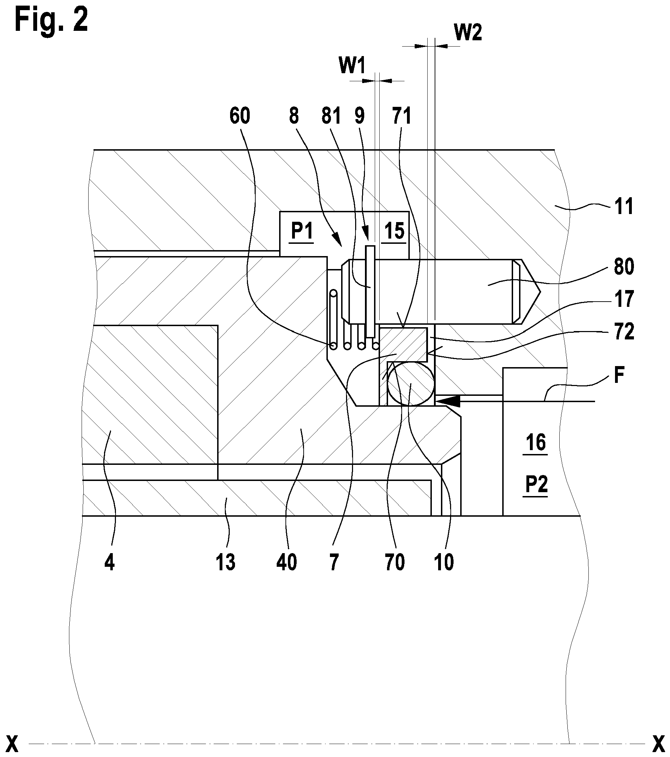

Nachfolgend wird unter Bezugnahme auf die Fig. 1 und 2 eine Gleitrichtungsanordnung 1 gemäß einem ersten bevorzugten Ausführungsbeispiel der Erfindung im Detail beschrieben.

Wie aus Fig. 1 ersichtlich ist, umfasst die Gleitringdichtungsanordnung 1 eine Gleitringdichtung 2 mit einem rotierendem Gleitring 3 und einem stationären Gleitring 4. Zwischen den Gleitflächen 3a, 4a der Gleitringe 3, 4 ist ein Dichtspalt 5 definiert.

Die Gleitringdichtungsanordnung dichtet an einer Welle 14 einen ersten Raum 15 von einem zweiten Raum 16 ab. An der Welle 14 ist eine Hülse 13 fixiert, welche auch den rotierenden Gleitring 3 hält. Der stationäre Gleitring 4 ist über einen stationären Gleitringträger 40 axial beweglich mit einem stationären Bauteil 11 verbunden.

Die Gleitringdichtungsanordnung 1 umfasst ferner eine Vorspanneinrichtung 6. Die Vorspanneinrichtung 6 umfasst eine Vielzahl von Zylinderfedern 60, welche entlang des Umfangs in gleichen Abständen angeordnet sind.

Ferner umfasst die Gleitringdichtungsanordnung 1 einen Abstützring 7. Der Abstützring 7 ist am stationären Gleitring 4 angeordnet und ist axial beweglich gehalten, was durch den Doppelpfeil A angedeutet ist. D.h. der Abstützring 7 ist in beide Richtungen in Axialrichtung X-X der Gleitringdichtungsanordnung 1 bewegbar.

Die Vorspanneinrichtung 6 mit der Vielzahl von Zylinderfedern 60 ist dabei zwischen dem Abstützring 7 und dem stationären Gleitringträger 40 angeordnet.

Ferner ist eine Fixiereinrichtung 8 vorgesehen, welche eingerichtet ist, den Abstützring 7 am stationären Bauteil 11 axial beweglich relativ zum stationären Gleitring 4 zu fixieren. Wie aus Fig. 1 ersichtlich ist, umfasst die Fixiereinrichtung 8 eine Vielzahl von Bolzen 80 und 80'. Die Bolzen 80' fixieren den stationären Gleitringträger 40 am stationären Bauteil 11. Die Bolzen 80 halten den Abstützring 7 axial beweglich am stationären Bauteil 11. Die Bolzen 80, 80' sind dabei jeweils in Ausnehmungen 71 am äußeren Umfang des Abstützrings 7 angeordnet.

Ferner umfasst die Gleitringdichtungsanordnung 1 einen Anschlag 9. Der Anschlag 9 dient zur Begrenzung der axial zurücklegbaren Wegstrecke des Abstützringes 7. in diesem Ausführungsbeispiel ist der Anschlag 9 an der Fixiereinrichtung 8 vorgesehen. Wie insbesondere aus Fig. 2 ersichtlich ist, ist hierbei am Bolzen 80 ein Haltering 81 angeordnet, welcher über den zylindrischen Außenumfang des Bolzens 80 vorsteht. Dieser kommt, bei einer Axialbewegung des Abstützringes 7 in Richtung zum stationären Gleitringträger 40 mit dem Haltering 81 in Kontakt und begrenzt somit eine erste axiale Wegstrecke W1 in Richtung zum stationären Gleitring 4. Eine zweite axiale Wegstrecke W2 in Richtung zum stationären Bauteil 11 ist durch das stationäre Bauteil 11 selbst beschränkt.

Fig. 2 zeigt dabei die beiden Wegstrecken W1, W2 im normalen Betriebszustand der Gleitringdichtungsanordnung 1, wobei die Wegstrecken vorzugsweise gleich groß sind.

Weiterhin umfasst die Gleitringdichtungsanordnung 1 eine Nebendichtung 10 in Form eines O-Rings. Wie aus Fig. 2 ersichtlich ist, ist die Nebendichtung 10 in einer Nut 70 im Abstützring 7 angeordnet. Die Nut 70 ist dabei an einer Seite 72, welche vom stationären Gleitring abgewandt ist, ausgebildet. Durch die Anordnung der Nebendichtung 10 an der vom stationären Gleitring 4 abgewandten Seite 72 am Abstützring 7, wird die axiale Bewegbarkeit des Abstützringes 7, insbesondere in Richtung zum stationären Gleitring 4, nicht beeinträchtigt. Wie aus Fig. 2 ersichtlich ist, welche den als normalen Betriebszustand bezeichneten Zustand zeigt, in welchem ein erster Druck P1 im ersten Raum 15 größer ist, als ein zweiter Druck P2 im zweiten Raum 16, dichtet die Nebendichtung 10 am stationären Gleitringträger 40, am Abstützring 7 und am stationären Bauteil 11 ab. Somit kann kein Fluid aus dem zweiten Raum 16 über die Nebendichtung 10 in den ersten Raum 15 gelangen. Da der erste Druck P1 auch an der Rückseite des stationären Gleitringträgers 40 ansteht, kann die Abdichtung am Dichtspalt 5 auf sichere Weise mittels der Vorspanneinrichtung 6 realisiert werden.

Im Falle einer Druckumkehr, bei welcher der zweite Druck P2 größer als der erste Druck P1 wird, wird eine Druckkraft F, ausgehend vom zweiten Raum 16 auf die Nebendichtung 10 ausgeübt. Dies ist in Fig. 2 durch den Pfeil F dargestellt. Sobald die Druckkraft F größer wird als die Rückstellkraft der Zylinderfedern 60, bewegt sich der Abstützring 7 in Richtung auf den stationären Gleitring 4 zu. Diese Axialbewegung wird durch den Haltering 81 begrenzt. Dadurch ist sichergestellt, dass die Nebendichtung 10 immer noch am stationären Gleitringträger 40, am Abstützring 7 und am stationären Bauteil 11 anliegt, da ein Spalt 17 zwischen dem Abstützring 7 und dem stationärem Bauteil 11 nicht zu groß wird. Weiterhin kann auch an den Dichtflächen 3a, 4a der Gleitringe 3, 4 eine ausreichende Schließkraft am Dichtspalt 5 ausgeübt werden, sodass auch die Gleitringdichtung 2 an den Dichtflächen 3a, 4a bei Druckumkehr weiterhin abdichtet. Somit wird sichergestellt, dass bei einer Druckumkehr nur minimal Fluid aus dem zweiten Raum 16 in den ersten Raum 15 gelangt.

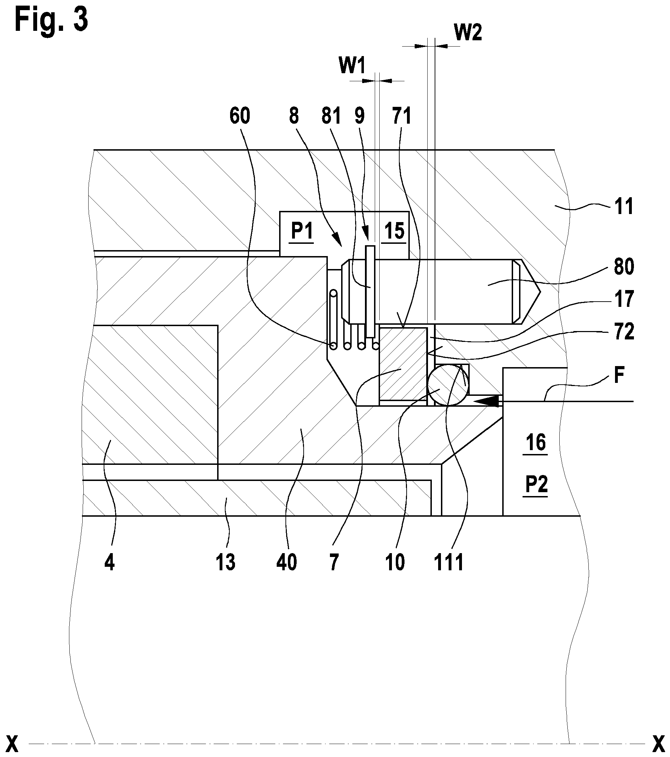

Fig. 3 zeigt einen Ausschnitt einer Gleitringdichtungsanordnung gemäß einem zweiten Ausführungsbespiel der Erfindung. Das zweite Ausführungsbeispiel entspricht im Wesentlichen dem ersten Ausführungsbeispiel, wobei funktional gleiche Teile wie im ersten Ausführungsbeispiel bezeichnet sind.

Wie aus Fig. 3 ersichtlich ist, ist beim zweiten Ausführungsbeispiel der Abstützring 7 nutfrei. Hierbei ist die Nebendichtung 10 in einer Nut 111 im stationären Bauteil 11 angeordnet. Die Nebendichtung dichtet an der Seite 72 des Abstützrings 7 ab. Somit kann der Abstützring 7 besonders einfach hergestellt werden. Bei einer Druckumkehr der Druckverhältnisse an der Gleitringdichtungsanordnung 1 wird, wie im ersten Ausführungsbeispiel eine Druckkraft F auf die Nebendichtung 10 ausgeübt. Dadurch kann sich der Abstützring 7 in Axialrichtung X-X bis zum Anschlag 9 am Haltering 81 verschieben. Hierbei bleibt die Nebendichtung 10 jedoch in abdichtendem Kontakt zum stationären Gleitringträger 40, zum Abstützring 7 und zum stationären Bauteil 11. Somit kann ebenfalls bei einer auftretenden Druckumkehr an der Gleitringdichtung verhindert werden, dass große Mengen an Medium aus dem zweiten Raum 16 in den ersten Raum 15 gelangt. Gleichzeitig bleibt auch die Gleitringdichtung 2 in der Schließposition.

Wie in den Ausführungsbeispielen beschrieben, kann somit erfindungsgemäß eine Gleitringdichtungsanordnung 1 bereitgestellt werden, welche insbesondere bei einer Druckumkehr der Druckverhältnisse an der Gleitringdichtung 2 eine sichere Abdichtung ermöglicht. Dadurch können Verschmutzungen des Mediums im Raum 15 durch Medien aus dem Raum 16, z.B. Lageröl, minimiert werden.

### Bezugszeichenliste

- 1: Gleitringdichtungsanordnung
- 2: Gleitringdichtung
- 3: Rotierender Gleitring
- 3a: Gleitfläche
- 4: stationärer Gleitring
- 4a: Gleitfläche
- 5: Dichtspalt
- 6: Vorspanneinrichtung
- 7: Abstützring
- 8: Fixiereinrichtung
- 9: Anschlag
- 10: Nebendichtung
- 11: stationäres Bauteil

- 13: Hülse
- 14: Welle
- 15: erster Raum
- 16: zweiter Raum
- 17: Spalt

- 40: stationärer Gleitringträger
- 60: Zylinderfeder
- 70: Nut
- 71: Ausnehmung für Fixiereinrichtung
- 72: Seite am Abstützring, die vom stationären Gleitring abgewandt ist
- 80, 80': Bolzen
- 81: Haltering
- 111: Nut
- A: axiale Bewegbarkeit des Abstützringes
- F: Druckkraft bei Druckumkehr
- P1: erster Druck
- P2: zweiter Druck
- W1: erste Wegstrecke des Abstützringes in Axialrichtung zum stationären Gleitring
- W2: zweite Wegstrecke des Abstützringes in Axialrichtung zum stationären Bauteil
- X-X: Axialrichtung

## Patentansprüche

1. Gleitringdichtungsanordnung umfassend
- eine Gleitringdichtung (2) mit einem rotierendem Gleitring (3) und einem stationären Gleitring (4), in welche zwischen sich ein Dichtspalt (5) definieren,
- eine Vorspanneinrichtung (6), welche den stationären Gleitring (4) in der Axialrichtung (X-X) der Gleitringdichtungsanordnung vorspannt,
- einen Abstützring (7), welcher am stationären Gleitring (4) angeordnet ist, wobei der Abstützring (7) relativ zum stationären Gleitring (4) axial beweglich ist, und
- eine Nebendichtung (10), welche eingerichtet ist, zwischen dem Abstützring (7) und dem stationären Bauteil abzudichten,
- eine Fixiereinrichtung (8), welche eingerichtet ist, den Abstützring (7) an einem stationären Bauteil axial beweglich zu fixieren,
wobei
- die Vorspanneinrichtung (6) zwischen dem Abstützring (7) und dem stationärem Gleitring angeordnet ist, **gekennzeichnet durch**
- einen Anschlag (9), welcher an der Fixiereinrichtung (8) vorgesehen ist, welcher eine erste Wegstrecke (W1) begrenzt, um welche der
axial bewegliche Abstützring (7) bewegbar ist,
- wobei im Fall einer Druckumkehr der Druckverhältnisse die erste Wegstrecke (W1) zwischen dem Abstützring (7) und dem Anschlag (9) kleiner ist als eine zweite Wegstrecke (W2) zwischen dem Abstützring (7) und dem stationären Bauteil.

2. Gleitringdichtungsanordnung nach Anspruch 1, wobei die Fixiereinrichtung (8) eine Vielzahl von Bolzen (80, 80') aufweist und der Abstützring (7) eine Vielzahl von Ausnehmungen (71) aufweist, durch welche die Bolzen (80, 80') hindurchgeführt sind.

3. Gleitringdichtungsanordnung nach einem der vorhergehenden Ansprüche, wobei die Ausnehmungen (71) am äußeren Umfang des Abstützringes (7) angeordnet sind.

4. Gleitringdichtungsanordnung nach Anspruch 2 oder 3, wobei der Anschlag (9) einen Haltering (81) umfasst, welcher an einem Bolzen (80) angeordnet ist, um die axiale erste Wegstrecke des axial bewegbaren Abstützringes (7) zu begrenzen.

5. Gleitringdichtungsanordnung nach einem der Ansprüche 1 bis 3, wobei die Fixiereinrichtung eine Vielzahl von mit Kopf versehenen Bolzen aufweist, wobei der Anschlag durch den Kopf der Bolzen bereitgestellt ist.

6. Gleitringdichtungsanordnung nach einem der vorhergehenden Ansprüche, wobei der Abstützring (7) an einer vom stationären Gleitring (4) abgewandten Seite (72) eine Nut (70) zur Aufnahme der Nebendichtung (10) aufweist.

7. Gleitringdichtungsanordnung nach Anspruch 6 wobei die Nut (70) an einem radialen Innenumfang des Abstützringes (7) angeordnet ist.

8. Gleitringdichtungsanordnung nach einem der Ansprüche 1 bis 5, wobei der Abstützring (7) keine Nut zur Aufnahme der Nebendichtung aufweist und die Nebendichtung an der vom stationären Gleitring (4) abgewandten Seite (72) des Abstützrings anliegt.

9. Gleitringdichtungsanordnung nach einem der vorhergehenden Ansprüche, ferner umfassend einen stationären Gleitringträger (40), welcher den stationären Gleitring (4) hält, wobei die Vorspanneinrichtung (6) zwischen dem stationären Gleitringträger (40) und dem Abstützring (7) angeordnet ist.

## Claims

1. A mechanical seal arrangement comprising:
- a mechanical seal (2) with a rotating slide ring (3) and a stationary slide ring (4) having a sealing gap (5) defined therebetween,
- a pretensioning device (6) which pretensions the stationary slide ring (4) in the axial direction (X-X) of the mechanical seal assembly,
- a support ring (7) which is arranged on the stationary slide ring (4), the support ring (7) being axially movable in relation to the stationary slide ring (4), and
- a secondary seal (10), which is arranged to seal between the support ring (7) and the stationary component,
- a fixing device (8) which is arranged for axially movable fixing the support ring (7) to a stationary component,
wherein
- the pretensioning device (6) is arranged between the support ring (7) and the stationary slide ring,
**characterized by**
- a stop (9) being provided at the fixing device (8) which limits a first travel distance (W1) by which the axially movable support ring (7) can be moved,
- wherein the first travel distance (W1) between the support ring (7) and the stop (9) is smaller than a second travel distance (W2) between the support ring (7) and the stationary component when pressure reversal of the pressure conditions occurs.

2. The mechanical seal assembly according to claim 1, wherein the fixing device (8) comprises a plurality of bolts (80, 80') and the support ring (7) comprises a plurality of recesses (71) through which said bolts (80, 80') are passed.

3. The mechanical seal arrangement according to one of the preceding claims, wherein the recesses (71) are arranged on the outer circumference of the support ring (7).

4. The mechanical seal arrangement according to claims 2 or 3, wherein the stop (9) comprises a retaining ring (81) arranged on a bolt (80) to limit the axial first travel distance of the axially movable support ring (7).

5. The mechanical seal arrangement according to one of the claims 1 to 3, wherein the fixing device comprises a plurality of headed bolts, the stop being provided by the head of the bolts.

6. The mechanical seal arrangement according to one of the preceding claims, wherein the support ring (7) has a groove (70) on a side (72) facing away from the stationary slide ring (4) for receiving the secondary seal (10).

7. The mechanical seal arrangement according to claim 6, wherein the groove (70) is arranged on a radial inner circumference of the support ring (7).

8. The mechanical seal arrangement according to one of the claims 1 to 5, wherein the support ring (7) does not have a groove for receiving the secondary seal and the secondary seal bears against the side (72) of the support ring facing away from the stationary slide ring (4).

9. The mechanical face seal assembly according to one of the preceding claims, further comprising a stationary slide ring carrier (40) holding the stationary slide ring (4), wherein the pretensioning device (6) is arranged between the stationary slide ring carrier (40) and the support ring (7).

## Revendications

1. Ensemble de garnitures mécaniques d'étanchéité comprenant
- une garniture mécanique d'étanchéité (2) avec un anneau de glissement rotatif (3) et un anneau de glissement stationnaire (4), qui définissent entre eux une fente d'étanchéité (5),
- un dispositif de précontrainte (6), lequel précontraint l'anneau de glissement stationnaire (4) dans la direction axiale (X-X) de l'ensemble de garnitures mécaniques d'étanchéité,
- un anneau de soutien (7), lequel est disposé sur l'anneau de glissement stationnaire (4), dans lequel l'anneau de soutien (7) est mobile axialement par rapport à l'anneau de glissement stationnaire (4), et
- un joint d'étanchéité secondaire (10), lequel est mis au point pour étanchéifier entre l'anneau de soutien (7) et le composant stationnaire,
- un dispositif de fixation (8), lequel est mis au point pour fixer de manière axialement mobile l'anneau de soutien (7) sur un composant stationnaire,
dans lequel
- le dispositif de précontrainte (6) est disposé entre l'anneau de soutien (7) et l'anneau de glissement stationnaire,
**caractérisé par**
- une butée (9), laquelle est prévue sur le dispositif de fixation (8), laquelle délimite une première distance (W1), de laquelle l'anneau de soutien (7) mobile axialement peut être déplacé,
- dans lequel, dans le cas d'une inversion de pression des rapports de pression, la première distance (W1) entre l'anneau de soutien (7) et la butée (9) est inférieure à une deuxième distance (W2) entre l'anneau de soutien (7) et le composant stationnaire.

2. Ensemble de garnitures mécaniques d'étanchéité selon la revendication 1, dans lequel le dispositif de fixation (8) présente une pluralité de boulons (80, 80'), et l'anneau de soutien (7) présente une pluralité d'évidements (71), à travers lesquels les boulons (80, 80') sont guidés de part en part.

3. Ensemble de garnitures mécaniques d'étanchéité selon l'une quelconque des revendications précédentes, dans lequel les évidements (71) sont disposés sur la périphérie extérieure de l'anneau de soutien (7).

4. Ensemble de garnitures mécaniques d'étanchéité selon la revendication 2 ou 3, dans lequel la butée (9) comprend un anneau de maintien (81), lequel est disposé sur un boulon (80) pour délimiter la première distance axiale de l'anneau de soutien (7) pouvant être déplacé axialement.

5. Ensemble de garnitures mécaniques d'étanchéité selon l'une quelconque des revendications 1 à 3, dans lequel le dispositif de fixation présente une pluralité de boulons pourvus d'une tête, dans lequel la butée est fournie par la tête des boulons.

6. Ensemble de garnitures mécaniques d'étanchéité selon l'une quelconque des revendications précédentes, dans lequel l'anneau de soutien (7) présente sur un côté (72) opposé à l'anneau de glissement stationnaire (4) une rainure (70) pour recevoir le joint d'étanchéité secondaire (10).

7. Ensemble de garnitures mécaniques d'étanchéité selon la revendication 6, dans lequel la rainure (70) est disposée sur une périphérie intérieure radiale de l'anneau de soutien (7).

8. Ensemble de garnitures mécaniques d'étanchéité selon l'une quelconque des revendications 1 à 5, dans lequel l'anneau de soutien (7) ne présente aucune rainure pour recevoir le joint d'étanchéité secondaire, et le joint d'étanchéité secondaire repose sur le côté (72), opposé à l'anneau de glissement stationnaire (4), de l'anneau de soutien.

9. Ensemble de garnitures mécaniques d'étanchéité selon l'une quelconque des revendications précédentes, comprenant en outre un support d'anneau de glissement stationnaire (40), lequel maintient l'anneau de glissement stationnaire (4), dans lequel le dispositif de précontrainte (6) est disposé entre le support d'anneau de glissement stationnaire (40) et l'anneau de soutien (7).
